# EUROPEAN PATENT APPLICATION

(11) **EP 2 566 140 A1**
(43) Date of publication of application: **06.03.2013**
(21) Application number: 11774637.0
(22) Date of filing: 26.04.2011
(51) Int. Cl.: H04M 1/02, H01Q 1/24

(54) **WIRELESS TERMINAL**

(30) Priority: 27.04.2010 JP 2010101948
(71) Applicant: Panasonic Corporation, Kadoma-shi Osaka 571-8501 (JP)
(72) Inventor: NAGANO, Kenya, Osaka 540-6207 (JP)
(74) Representative: Grünecker, Kinkeldey, Stockmair & Schwanhäusser
(86) International application number: PCT/JP2011/002460
(87) International publication number: WO 2011/135851

(57) **Abstract**

An object of the present invention is to provide a wireless terminal which includes two radio units of a communication radio unit and a broadcast reception radio unit, and which provides a high antenna performance in both of an open state and a closed state of a housing during a communication using the communication radio unit, and in the open state of the housing only during a broadcast reception using the broadcast reception radio unit.

A first hinge (105) and a second hinge (106) are spaced from each other by 1/30 wavelength or more of an operating frequency of a communication radio unit (112). A gap (G1) between the first hinge (105) and a metal plate (assuming a ground pattern of a circuit board (103)) arranged within a first housing (101) (assuming the earth pattern of the circuit board (103)) arranged within the first housing (101) is made smaller than a gap (G2) between a second hinge (106) and the metal plate arranged within the first housing (101). A broadcast reception radio unit (111) is connected to the first hinge (105); and a communication radio unit (112) is connected to the second hinge (106).

## Description

### Technical Field

The present invention relates to a wireless terminal such as a cellular phone, and more particularly to a wireless terminal including two radio units different in operating frequency.

### Background Art

There is a cellular phone including two radio units of a communication radio unit and a broadcast reception radio unit. An antenna performance required according to a use state of the cellular phone is different between audio communication and broadcast reception. For example, in recent mainstream folding cellular phones, the high antenna performance is required in both of an open state and a closed state of a housing during a communication using the communication radio unit, and the high antenna performance is required only in the open state of the housing during broadcast reception using the broadcast reception radio unit.

As the cellular phones including the broadcast reception antenna, a cellular phone disclosed, for example, in Patent Document 1 has been known. The Patent Document 1 discloses a technique in which a hinge that rotatably couples upper and lower housings together is made of metal, and the hinge and a feed element that is electrically connected to the hinge are allowed to function as a television tuner antenna.

Also, as the folding wireless terminal that improves the antenna performance, for example, a folding mobile wireless device disclosed in Patent Document 2 and a mobile wireless apparatus disclosed in Patent Document 3 have been known. Patent Document 2 discloses a technique in which a hinge that rotatably couples two upper and lower housings together is made of metal, and an antenna element disposed in the hinge and the upper housing and a ground pattern on a circuit board disposed within the lower housing are allowed to function as a dipole antenna. Patent Document 3 discloses a technique in which a feed sheet metal is disposed on a lower housing side in the vicinity of a hinge that rotatably couples two upper and lower housings together, and a plate-like conductive element is disposed on the upper housing side. In the technique, the feed sheet metal is connected to a ground pattern on a board within the lower housing, and the plate-like conductive element is connected to a ground pattern on a board within the upper housing. When the upper housing and the lower housing are brought into an open state, the feed sheet metal and the plate-like conductive element are capacitively coupled with each other, and the ground pattern within the upper housing and the ground pattern within the lower housing are allowed to function as a dipole antenna.

### Related Art Documents

### Patent Documents

Patent Document 1: JP-B-3596774
Patent Document 2: JP-A-2006-054843 (JP-B-4358084)
Patent Document 3: JP-A-2009-094860

### Summary of the Invention

### Problem to be Solved by the Invention

However, in the mobile wireless device disclosed in the above-mentioned Patent Document 1, in a frequency band in which a casing length is about one wavelength, it is difficult to obtain the higher antenna performance in the housing closed state. Also, each of the folding mobile wireless device disclosed in Patent Document 2 and the mobile wireless apparatus disclosed in Patent Document 3 as described above corresponds to only one radio unit, and there is no disclosure of a case where a plurality of radio unit antennas different in the antenna performance, which is required by the open and closed states of the housing, is mounted.

The present invention is made in view of the above-described circumstances, and an object thereof is to provide to a wireless terminal which includes two radio units of a communication radio unit and a broadcast reception radio unit, and which provides a high antenna performance: in both of the open state and the closed state of the housing during the communication using the communication radio unit; and in the open state of the housing only during the broadcast reception using the broadcast reception radio unit.

### Means for Solving the Problem

The present invention provides a wireless terminal including: a first housing; a second housing that is rotatably connected to the first housing; a first hinge that connects the first housing and the second housing; a second hinge that connects the first housing and the second housing; a metal plate that is arranged within the first housing; a circuit board that is arranged within the second housing; a first radio unit that is arranged on the circuit board; and a second radio unit that is arranged on the circuit board and is different from the first radio unit, wherein the first hinge and the second hinge are arranged with a given gap therebetween, wherein the first hinge is electrically connected to the first radio unit, wherein the second hinge is electrically connected to the second radio unit, and wherein a gap between the first hinge and the metal plate is smaller than a gap between the second hinge and the metal plate.

According to the above configuration, the first hinge and the second hinge are arranged with a given gap therebetween, the gap between the first hinge and the metal plate arranged within the first housing is made narrower than the gap between the second hinge and the metal plate, the first hinge is connected with the first radio unit, and the second hinge is connected with the second radio unit. With this configuration, the high antenna performance is obtained in both of the open state and the closed state of the housing during a communication using the second radio unit, and the high antenna performance is obtained only in the open state of the housing during broadcast reception using the first radio unit.

In the above configuration, the first hinge and the second hinge are spaced from each other by 1/30 wavelength or more of an operating frequency which is higher one of the first radio unit and the second radio unit.

According to the above configuration, an interference between the first hinge and the second hinge used as the antenna can be reduced.

In the above configuration, the first radio unit includes a broadcast reception radio unit, and the second radio unit includes a communication radio unit.

According to the above configuration, the high antenna performance is obtained in both of the open state and the closed state of the housing during a communication using the communication radio unit, and the high antenna performance is obtained only in the open state of the housing during broadcast reception using the broadcast reception radio unit.

In the above configuration, the broadcast reception radio unit includes a digital television broadcast reception radio unit, and the communication radio unit includes a voice communication radio unit.

According to the above configuration, voice communication is enabled with high sensitivity even if the housing is opened or closed, and the digital television broadcasting can be received with high sensitivity when the housing is opened.

In the above configuration, the second hinge is longer than the first hinge in a shorter side direction of the terminal.

According to the above configuration, the high antenna performance is obtained in both of the open state and the close state of the housing during the communication using the communication radio unit.

In the above configuration, the second hinge includes a button to be depressed, and a mechanism to allow the second hinge to conduct rotating operation by depression of the button.

According to the above configuration, when a button provided in the second hinge is depressed, the first housing and the second housing are automatically opened. That is, the first housing and the second housing can be opened easily and in a short time.

In the above configuration, the gap between the second hinge and the metal plate is larger than a gap between the second hinge and the circuit substrate.

According to the above configuration, the high antenna performance can be exercised when the housing is closed.

### Advantages of the Invention

According to the present invention, in a wireless terminal including two radio units of a communication radio unit and a broadcast reception radio unit, a high antenna performance is provided: in both of the open state and the closed state of the housing during the communication using the communication radio unit; and in the open state of the housing only during the broadcast reception using the broadcast reception radio unit.

### Brief Description of the Drawings

FIG. 1 is a diagram illustrating an outline configuration of an interior of a wireless terminal according to an embodiment of the present invention in which FIG. 1(a) is a front view, and FIG. 1(b) is a side view.
FIG. 2 is an enlarged diagram of a center portion of FIG. 1(a).
FIG. 3 is a perspective view illustrating an overview of a second hinge of the wireless terminal in FIG. 1.

### Mode for Carrying Out the invention

Hereinafter, a preferred embodiment for carrying out the present invention will be described in detail with reference to the drawings.

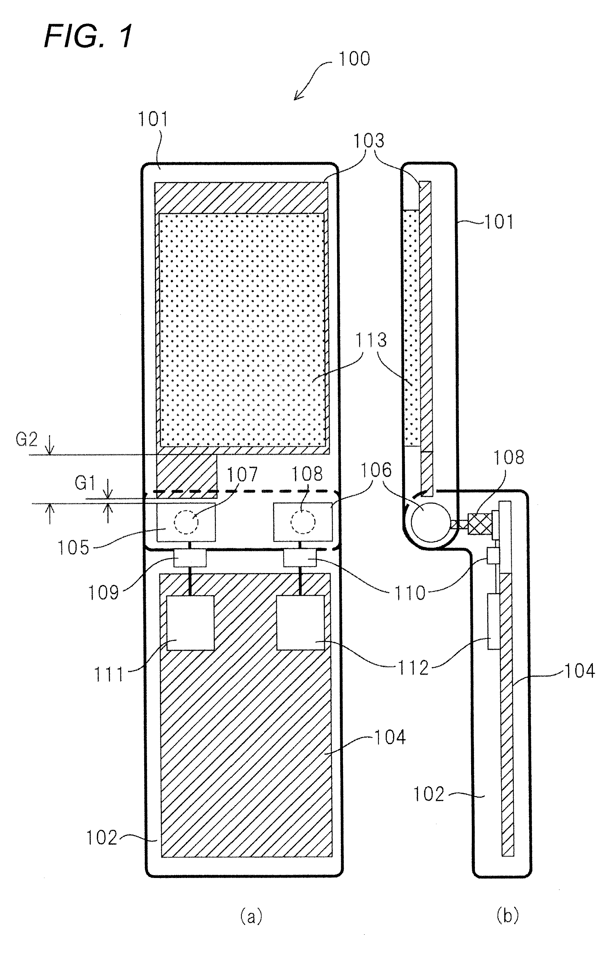

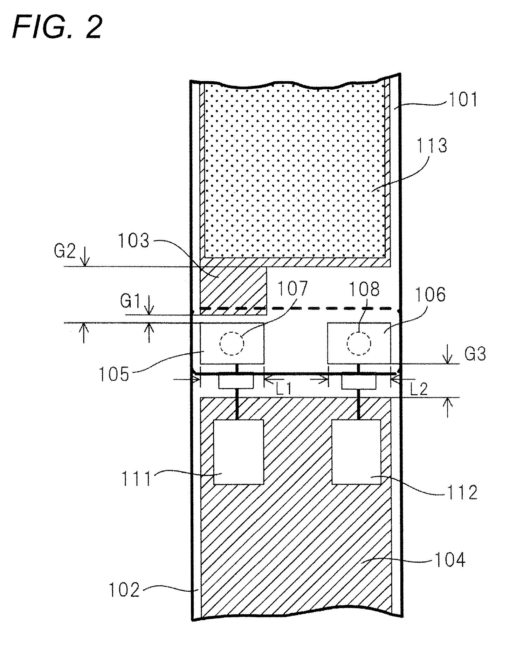

FIG. 1 is a diagram illustrating an outline configuration of an interior of a wireless terminal according to an embodiment of the present invention, in which FIG. 1(a) is a front view, and FIG. 1(b) is a side view. Also, FIG. 2 is an enlarged diagram of a center portion of FIG. 1(a). In FIGS. 1(a), 1(b), and 2, a wireless terminal 100 according to this embodiment is a folding cellular phone. The wireless terminal 100 includes a first housing 101, a second housing 102 which is rotatably connected to the first housing 101, a first hinge 105 made of metal which connects the first housing 101 and the second housing 102, a second hinge 106 made of metal which connects the first housing 101 and the second housing 102, a circuit board 103 which is arranged within the first housing 101, a circuit board 104 which is arranged within the second housing 102, a broadcast reception radio unit 111 which is a first radio unit arranged on the circuit board 104 within the second housing 102, a communication radio unit 112 which is a second radio unit arranged on the circuit board 104 within the second housing 102, and a liquid crystal display 113 that is mounted on the circuit board 103 within the first housing 101.

Since the wireless terminal 100 according to this embodiment is a cellular phone, the communication radio unit 112 conducts the voice communication. The broadcast reception radio unit 111 is a radio unit that receives, for example, digital television broadcasting. The operating frequency of the communication radio unit 112 is, for example, 1920 to 2170 MHz, and the operating frequency of the broadcast reception radio unit 111 is, for example, 470 to 770 MHz.

The first hinge 105 is electrically connected to the broadcast reception radio unit 111 through a feed pin 107. The second hinge 106 is electrically connected to the communication radio unit 112 through a feed pin 108. A matching circuit 109 that conducts impedance matching is inserted between the feed pin 107 on the first hinge 105 side and the broadcast reception radio unit 111. Likewise, a matching circuit 110 is inserted between the feed pin 108 on the second hinge 106 side and the communication radio unit 112. The broadcast reception radio unit 111 receives the digital television broadcasting with the first hinge 105 as an antenna. The communication radio unit 112 conducts a radio communication that realizes the voice communication as the second hinge 106 as an antenna.

The first hinge 105 and the second hinge 106 are arranged on both sides of the terminal in a shorter side direction thereof. In this case, since each of the first hinge 105 and the second hinge 106 is used as the antenna, in order to reduce an interference therebetween, the first hinge 105 and the second hinge 106 are spaced from each other by 1/30 wavelength or more of the operating frequency which is higher one of the broadcast reception radio unit 111 and the communication radio unit 112. In this embodiment, since the operating frequency of the communication radio unit 112 is higher, the first hinge 105 and the second hinge 106 are spaced from each other by 1/30 wavelength or more of the operating frequency of the communication radio unit 112. As an example, the first hinge 105 and the second hinge 106 are spaced from each other by 5mm or longer.

Also, the second hinge 106 is spaced from a metal plate (assuming a ground pattern of the circuit board 103) within the first housing 101 with a gap G2, and the first hinge 105 is spaced from the metal plate within the first housing 101 with a gap G1 smaller than the gap G2. That is, the gap G1 between the first hinge 105 and the metal plate within the first housing 101 is narrower than the gap G2 between the second hinge 106 and the metal plate within the first housing 101 (G1<G2). The gaps G1 and G2 are different even if the metal plate within the first housing 101 is any one of a ground pattern of the circuit board 103, a metal chassis, and a housing external metal, and the broadcast reception radio unit 111 side questioning the antenna performance is narrowed only when the housing is opened. The first hinge 105 and the metal plate within the first housing 101 may be connected directly to each other.

Also, as illustrated in FIG. 2, a length L2 of the second hinge 106 in the shorter side direction of the terminal is longer than a length L1 of the first hinge 105 in the shorter side direction of the terminal (L1 < L2). With this configuration, during the communication using the communication radio unit 112, the high antenna performance is obtained in both of the open state and the closed state of the housing.

Also, as illustrated in FIG. 2, a gap G3 between the second hinge 106 and the circuit board 104 is smaller than the above-mentioned gap G2 between the second hinge 106 and the metal plate within the first housing 101 (G3 < G2). With this configuration, the higher antenna performance is obtained when the housing is closed.

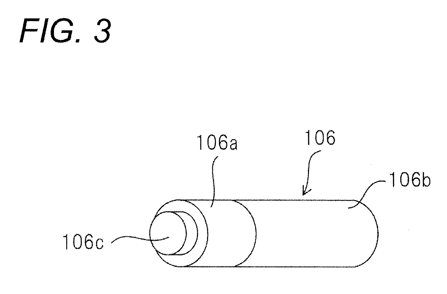

Also, the second hinge 106 has a button 106c (which will be described later) to be depressed, and includes a mechanism in which the first housing 101 and the second housing 102 are opened by a force of a spring disposed within the second hinge 106 with depression of the button 106c. FIG. 3 is a perspective view illustrating an overview of the second hinge 106. In the figure, one end of a substantially cylindrical fixed part 106a of the second hinge 106 is connected to a same substantially cylindrical sliding part 106b in a concentrically rotatable state. The other end of the fixed part 106a is connected with the button 106c. A metal spring and a shaft, which are not shown, are disposed within the second hinge 106, and the sliding part 106b rotates by depressing the button 106c. When the sliding part 106b rotates, the first housing 101 and the second housing 102 are opened.

A physical relationship of the first hinge 105, the second hinge 106, the metal plate within the first housing 101 (assuming the ground pattern of the circuit board 103), and the circuit board 104 within the second housing 101 will be summarized as follows.

(1) The gap G1 between the first hinge 105 and the metal plate within the first housing 101 is narrower than the gap G2 between the second hinge 106 and the metal plate within the first housing 101 (G1<G2).
(2) The first hinge 105 and the second hinge 106 are spaced from each other by 1/30 wavelength or more of the operating frequency of the communication radio unit 112.
(3) The length L2 of the second hinge 106 in the shorter side direction of the terminal is longer than the length L1 of the first hinge 105 in the shorter side direction of the terminal (L2 > L1).
(4) The gap G2 between the second hinge 106 and the metal plate within the first housing 101 (assuming the ground pattern of the circuit board 103) is larger than the gap G3 between the second hinge 106 and the circuit board 104 within the second housing 102 (G2 > G3).

With the above physical relationship, the high antenna performance is obtained in both of the open state and the closed state of the housing in the communication radio unit 112, and the high antenna performance is obtained only in the open state of the housing in the broadcast reception radio unit 111.

Thus, according to the wireless terminal 100 of this embodiment, the first hinge 105 and the second hinge 106 are arranged with a given gap therebetween. The gap G1 between the first hinge 105 and the metal plate (assuming the ground pattern of the circuit board 103) arranged within the first housing 101 is made smaller than the gap G2 between the second hinge 106 and the metal plate within the first housing 101. The broadcast reception radio unit 111 is connected to the first hinge 105, and the communication radio unit 112 is connected to the second hinge 106. As a result, the high antenna performance is obtained in both of the open state and the closed state of the housing in the communication radio unit 112, and the high antenna performance is obtained only in the open state of the housing in the broadcast reception radio unit 111.

In particular, the first hinge 105 and the second hinge 106 are spaced from each other by 1/30 wavelength or more of the operating frequency of the communication radio unit 112. As a result, an interference between the first hinge 105 and the second hinge 106 used as the antenna can be reduced.

Also, the second hinge 106 is made longer than the first hinge 105 in the shorter side direction of the terminal. With this configuration, during the communication using the communication radio unit 112, the high antenna performance is obtained in both of the open state and the closed state of the housing.

Also, the gap G2 between the second hinge 106 and the metal plate (assuming the ground pattern of the circuit board 103) is larger than the gap G3 between the second hinge 106 and the circuit board 104. With this configuration, the higher antenna performance is obtained in the closed state of the housing.

Also, the second hinge 106 includes the button 106c to be depressed, and the mechanism to allow the second hinge 106 to conduct rotating operation by depression of the button 106c. With this configuration, the first housing 101 and the second housing 102 can be automatically opened by depression of the button 106c.

The present invention has been described in detail and with reference to the specific embodiment. However, it would be apparent to an ordinary skilled person that various changes or modifications can be made without departing from the spirit and the scope of the present invention.

The present invention is based on Japanese Patent Application No. 2010-101948 filed on April 27, 2010, and content thereof is incorporated herein by reference.

### Industrial Applicability

The present invention has advantageous effects that, to provide the wireless terminal which includes two radio units of the communication radio unit and the broadcast reception radio unit, and which provides the high antenna performance: in both of the open state and the closed state of the housing during the communication using the communication radio unit; and in the open state of the housing only during the broadcast reception using the broadcast reception radio unit, and is applicable to the wireless terminal such as the cellular phone including the two radio units of the communication radio unit and the broadcast reception radio unit.

### Description of Reference Signs

- 100: Wireless Terminal
- 101: First Housing
- 102: Second Housing
- 103, 104: Circuit Board
- 105: First Hinge
- 106: Second Hinge
- 106a: Fixed Part
- 106b: Sliding Part
- 106c: Button
- 107, 108: Feed Pin
- 109, 110: Matching Circuit
- 111: Broadcast Reception Radio Unit
- 112: Communication Radio Unit
- 113: Liquid Crystal Display

## Claims

1. A wireless terminal comprising:
a first housing;
a second housing that is rotatably connected to the first housing;
a first hinge that connects the first housing and the second housing;
a second hinge that connects the first housing and the second housing;
a metal plate that is arranged within the first housing;
a circuit board that is arranged within the second housing;
a first radio unit that is arranged on the circuit board; and
a second radio unit that is arranged on the circuit board and is different from the first radio unit,
wherein the first hinge and the second hinge are arranged with a given gap therebetween,
wherein the first hinge is electrically connected to the first radio unit,
wherein the second hinge is electrically connected to the second radio unit, and
wherein a gap between the first hinge and the metal plate is smaller than a gap between the second hinge and the metal plate.

2. The wireless terminal according to claim 1,
wherein the first hinge and the second hinge are spaced from each other by 1/30 wavelength or more of an operating frequency which is higher one of the first radio unit and the second radio unit.

3. The wireless terminal according to claim 1 or 2,
wherein the first radio unit comprises a broadcast reception radio unit, and wherein the second radio unit comprises a communication radio unit.

4. The wireless terminal according to claim 3,
wherein the broadcast reception radio unit comprises a digital television broadcast reception radio unit, and
wherein the communication radio unit comprises a voice communication radio unit.

5. The wireless terminal according to any one of claims 1 to 4,
wherein the second hinge is longer than the first hinge in a shorter side direction of the terminal.

6. The wireless terminal according to any one of claims 1 to 5,
wherein the second hinge comprises a button to be depressed, and a mechanism to allow the second hinge to conduct rotating operation by depression of the button.

7. The wireless terminal according to any one of claims 1 to 6,
wherein the gap between the second hinge and the metal plate is larger than a gap between the second hinge and the circuit substrate.
